# FASCICULE DE BREVET EUROPEEN

(11) **EP 2 739 578 B1**
(45) Date de publication et mention de la délivrance du brevet: **17.06.2015**
(21) Numéro de dépôt: 12744081.6
(22) Date de dépôt: 11.07.2012
(51) Int. Cl.: C03B 18/16, C03B 18/18

(54) **ENCEINTE DE FLOTTAGE DU VERRE**
FLOATKAMMER ZUR HERSTELLUNG VON GLAS
GLASS FLOAT CHAMBER

(30) Priorité: 02.08.2011 FR 1157075
(43) Date de publication de la demande: 11.06.2014
(73) Titulaire: Saint-Gobain Glass France, 92400 Courbevoie (FR)
(72) Inventeur: BIGNON, Guillaume, 75009 Paris (FR); BOUILLET, Fabien, 75017 Paris (FR); GASSER, Stéphane, 91190 GIF SUR YVETTE (FR)
(74) Mandataire: Colombier, Christian
(86) Numéro de dépôt international: PCT/FR2012/051642
(87) Numéro de publication internationale: WO 2013/017760

(56) Documents cités:
- EP-A1- 0 031 772
- US-A- 3 817 735
- KONDRASHOV V I ET AL: "FORMATION FEATURES OF THIN FLOAT GLASS AND PROSPECTS FOR THIS TECHNOLOGY (A REVIEW)", GLASS AND CERAMICS, SPRINGER, NEW YORK, NY, US, vol. 57, no. 1/02, 1 janvier 2000 (2000-01-01), pages 3-07, XP000966241, ISSN: 0361-7610

## Description

L'invention concerne une enceinte de flottage du verre sur un bain de métal fondu et son utilisation pour produire du verre plat.

Dans une enceinte de flottage du verre, le verre s'écoule par la lèvre de coulée sur le bain d'étain. Pour la production de verre mince (épaisseur inférieure à l'épaisseur d'équilibre du verre considéré, généralement environ 6 mm), ce verre est étiré transversalement et axialement par l'action de roues dentées latérales, dites top-rolls, et axialement par l'étenderie en aval de l'enceinte de flottage. Pour la production de verre épais (épaisseur supérieure à l'épaisseur d'équilibre du verre considéré, généralement environ 6 mm), ce verre est compressé transversalement et étiré axialement par l'action des top-rolls, et étiré axialement par l'étenderie. Ainsi, pour la production de verre mince (épaisseur inférieure à l'épaisseur d'équilibre du verre considéré, généralement environ 6 mm), après la zone des top-rolls, le verre subit une diminution de largeur appelée striction. Pour diminuer la quantité de métal fondu (généralement de l'étain) nécessaire, assurer le contact des actionneurs latéraux (comme les top-rolls) avec la feuille en aval et limiter l'évaporation du métal (étain en général) à partir de sa surface libre, l'enceinte de flottage présente une grande largeur au niveau de la zone de coulée et de formage et une plus petite largeur plus en aval. Le raccordement entre ces deux zones de largeurs différentes est assuré par un épaulement qui, par facilité de conception, s'étend sur ce que l'homme du métier appelle une « bay ». Une « bay » est une unité de construction de ces installations dont la longueur est de 3,048 m. Il s'agit d'une unité de mesure exclusivement dans la direction longitudinale de l'enceinte de flottage. Par direction longitudinale, on entend la direction d'écoulement du verre dans l'enceinte, ladite direction étant parallèle à l'axe de l'enceinte et à l'axe du ruban de verre. Les enceintes de flottage sont aujourd'hui construites par juxtaposition et assemblage d'unité (ou « briques ») faisant 3,048 mètres de long (dans le sens longitudinal, c'est-à-dire le sens d'écoulement du verre). La forme des enceintes de flottage est largement standardisée compte tenu de ce qu'il s'agit d'installations gigantesques devant fonctionner sans interruption pendant des années. On ne peut donc pas se permettre de prendre des risques en modifiant la forme générale de ces enceintes. C'est pourquoi les enceintes de flottage ont toutes des formes générales très proches. Notamment, lorsqu'elles comprennent un épaulement dans leurs parois latérales, cet épaulement forme un angle proche de 135° (angle à l'intérieur de l'enceinte formé entre la paroi en amont de l'épaulement et l'épaulement).

Les WO2005/073138, US5862169, CA1054371 enseignent des enceintes de flottage comprenant des épaulements latéraux formant sensiblement un angle de 140° avec la direction d'écoulement du verre (angle à l'intérieur de l'enceinte formé entre la paroi en amont de l'épaulement et l'épaulement).

Le US3843346 enseigne une enceinte de flottage sans épaulement latéral. Une telle enceinte est très rare car très peu flexible. En effet, elle n'est adaptée qu'à la réalisation de verre plat à l'épaisseur égale ou supérieure à l'épaisseur d'équilibre du verre considéré, généralement environ 6 mm.

Le US4115091 enseigne une enceinte de flottage comprenant un épaulement latéral sur les deux côtés latéraux, lesdits épaulements formant sensiblement un angle de 90° avec la direction d'écoulement du verre.

On a remarqué sur des enceintes de flottage comprenant des épaulements latéraux à 125-140° (angle à l'intérieur de l'enceinte formé entre la paroi en amont de l'épaulement et l'épaulement) que le ruban de verre en sortant était animé d'un léger mouvement de va et vient latéral. Ce léger mouvement était jusqu'alors inexpliqué et accepté comme instabilité inhérente à ce genre d'installation. Son amplitude étant de l'ordre de quelques cm, il nécessite néanmoins de prendre un peu plus de marge à la découpe des bords, engendrant autant de perte de verre en calcin. La perte du rendement de production est de l'ordre de 1%.

En s'intéressant aux mouvements de convection dans le bain de métal fondu supportant le verre en défilement, on a maintenant trouvé la raison de ce problème. Le bain de métal est en effet sujet à la formation de tourbillons dans la zone de mélange entre le courant aller (sens de défilement du verre) du métal entraîné par le verre et le courant retour au niveau de la surface découverte du métal. On distingue deux groupes de tourbillons, chaque groupe étant proche d'une paroi latérale de l'enceinte. Ces deux groupes de tourbillons remontent l'enceinte de l'aval vers l'amont, c'est-à-dire dans le sens opposé à celui de défilement du ruban de verre. On a observé que tout en aval de l'enceinte, les tourbillons sont en phase, c'est-à-dire qu'à un tourbillon sur la droite correspond un tourbillon sur la gauche, et ce, pour une même distance de la paroi aval de l'enceinte. Ces tourbillons remontent donc «en phase » l'enceinte, mais le premier épaulement dans les parois latérales provoque une inversion de phase : à un tourbillon sur la droite ne correspond plus un tourbillon sur la gauche, mais un espace entre deux tourbillons. Cette opposition de phase entre les deux groupes de tourbillons sur les côtés est conservée jusqu'à la fin de leur remontée en direction de la paroi amont de l'enceinte, même si un autre épaulement est rencontré. Or un tourbillon est associé à une inhomogénéité de température du métal fondu. La température d'un tourbillon est sensiblement plus élevée que la température entre deux tourbillons. On estime que cette différence de température est de l'ordre de 20°C. Or une telle différence de température du métal liquide a une influence locale sur là viscosité du verre. Ainsi, l'opposition de phase des tourbillons se traduit par une opposition de phase des variations de température et de viscosité du verre sur ses bords latéraux. Ainsi, les top-rolls, placés symétriquement sur les deux côtés de l'enceinte par rapport à l'axe longitudinal de l'enceinte, mordent-ils dans du verre à la viscosité fluctuante sur les bords, les variations de viscosité étant en opposition de phase d'un bord à l'autre du ruban. C'est cette action des top-rolls sur le ruban dont la viscosité des bords est en opposition de phase qui provoque ce mouvement de va et vient latéral du ruban.

Il a déjà été proposé, par exemple dans EP0031772, de placer des barrages, généralement appelés « drapeaux » (« flags » en anglais) à l'intérieur du bain de métal au niveau de la partie découverte du métal fondu (partie non recouverte de verre) pour limiter les courants retour au niveau de la surface découverte du métal. Leur efficacité est réelle mais encore insuffisante.

L'invention remédie au problème susmentionné. On a trouvé que l'on pouvait supprimer le mouvement latéral du ruban en supprimant l'opposition de phase des tourbillons dans le bain de métal. On a trouvé que l'on pouvait supprimer l'opposition de phase des tourbillons dans le bain de métal en supprimant les épaulements trop brusques dans les parois latérales. Selon l'invention, on ne supprime pas les épaulements qui sont utiles à réduire les quantités de métal fondu dans l'enceinte. En effet, à ces températures de flottage du verre, l'étain tend à s'évaporer et il est utile de réduire la surface libre de métal fondu dans l'enceinte. Il est donc utile que les parois latérales de l'enceinte de flottage soient plus proches l'une de l'autre en aval qu'en amont de l'enceinte.

L'invention concerne en premier lieu une enceinte de flottage de verre sur un bain de métal fondu comprenant une paroi amont, une paroi aval et deux parois latérales, des rouleaux d'entraînement du verre selon une direction de défilement d'amont en aval, les parois latérales comprenant chacune un épaulement en correspondance symétrique l'un par rapport à l'autre, procurant une diminution de la largeur de l'enceinte dans la direction de défilement du verre, ledit épaulement commençant en un premier point et finissant en un deuxième point de la paroi latérale lesdits points étant en contact avec la surface du bain de métal, le plan vertical passant par ces deux points formant avec le plan vertical parallèle à la direction de défilement du verre et passant par le premier point, un angle à l'intérieur de l'enceinte supérieur à 150°.

C'est la grande valeur de cet angle qui traduit la douce progressivité du rétrécissement de la distance entre les parois latérales dans l'enceinte de flottage quand on va de l'amont vers l'aval (dénomination correspondant à la direction de déplacement du verre dans l'enceinte). Cet angle est même de préférence supérieur à 160° et de manière encore préférée supérieur à 165°. Généralement, cet angle est inférieur à 175°.

L'épaulement est tel que lorsqu'on le parcourt en se rapprochant de l'axe de l'enceinte, on se rapproche également de la paroi aval.

L'épaulement est généralement tel que quelle que soit la paire de points différents faisant partie de l'épaulement, lesdits points étant en contact avec la surface du métal fondu, le plan vertical passant par ces deux points forme avec le plan vertical parallèle à la direction de défilement du verre et passant par l'un ou l'autre des points, un angle à l'intérieur de l'enceinte supérieur à 150°, et de préférence supérieur à 160°.

En général, la distance entre les deux parois latérales à l'endroit où le verre sort de l'enceinte, c'est-à-dire au niveau de la paroi aval de l'enceinte, est inférieure d'au moins 20 % et souvent inférieure d'au moins 30 % comparé avec la distance maximale entre les deux parois latérales. Cette distance maximale entre les deux paroi se situe généralement au niveau où le ruban de verre présente sa largeur maximale. Cette largeur maximale (du ruban et entre les parois) est obtenue dans la zone de formage où ses top-rolls élargissent latéralement la feuille pour la production de verre mince (moins que la hauteur d'équilibre du verre soit généralement moins de 6 mm d'épaisseur). C'est en effet à cet endroit de formage du verre que les parois latérales doivent être espacées le plus l'une de l'autre. Cette largeur maximale du ruban de verre se trouve généralement à une distance de la paroi amont comprise entre 5 et 30 m. Ainsi, l'invention est particulièrement adaptée à la réalisation de verre plat d'épaisseur inférieure à 6 mm.

Un épaulement dans une paroi latérale procure un changement de direction de la paroi entre la paroi en amont de l'épaulement et l'épaulement lui-même. Le changement de direction est progressif, c'est-à-dire qu'il procure un rapprochement sans épaulement abrupt de la paroi vers l'axe longitudinal médian de l'enceinte. En général, l'épaulement part d'une portion droite de paroi de direction longitudinale et aboutit à une autre portion droite de paroi de direction longitudinale. Selon la direction longitudinale, la longueur de l'épaulement est supérieur à 4 m et de préférence supérieur à 5 m voire même supérieur à 10 m et même supérieur à 20 m et même supérieur à 30 m. Généralement, selon la direction longitudinale, la longueur de l'épaulement est inférieure à 80 m. La longueur de l'épaulement peut être inférieure à 60 m. On procure déjà une amélioration notable en réalisant l'épaulement non pas sur une « bay » mais sur la distance de deux bays (6,096 m). Ainsi, selon l'invention la longueur de l'épaulement est généralement d'au moins deux bays (12,192 m) selon la direction longitudinale. L'épaulement est généralement lui-même une section droite de paroi.

Généralement, l'épaulement commence à une distance de la paroi amont supérieure à 25% de la distance totale entre la paroi amont et la paroi aval de l'enceinte. Généralement, l'épaulement finit à une distance de la paroi amont inférieure à 75% de la distance totale entre la paroi amont et la paroi aval de l'enceinte. On entend qu'un épaulement « commence » en amont et « finit » en aval.

Généralement, l'enceinte est symétrique par rapport à un axe longitudinal médian. A un épaulement dans une paroi latérale correspond un épaulement qui lui est symétrique dans l'autre paroi latérale. Chaque paroi latérale comprend donc l'épaulement selon l'invention, ces deux épaulements étant placés symétriquement l'un de l'autre par rapport à l'axe longitudinal de l'enceinte.

On peut placer des drapeaux dans le bain de métal de l'enceinte selon l'invention.

L'invention concerne également un procédé de fabrication de verre plat comprenant le flottage du verre dans une enceinte selon l'invention. L'invention présente un intérêt pour le verre mince et le verre épais (respectivement moins ou plus épais que l'épaisseur d'équilibre du verre fondu sur le métal fondu). Le verre plat final a généralement une épaisseur comprise entre 0,05 mm et 30 mm. Notamment, le verre peut être étiré transversalement et axialement par l'action des rouleaux dentés dans l'enceinte de flottage de façon à obtenir un verre plus mince que l'épaisseur d'équilibre du verre fondu sur le métal fondu. Ainsi, le procédé selon l'invention est particulièrement adapté à la fabrication de verre plat d'épaisseur inférieure à 6 mm (entre 0,05 et 6 mm). Généralement, la distance entre les deux parois latérales est inférieur de 20 % voire inférieur de 30 % au niveau de la paroi aval de l'enceinte, comparé avec la distance entre les deux parois latérales au niveau où le ruban de verre présente sa largeur maximale. Généralement, la largeur maximale du ruban de verre se trouve à une distance de la paroi amont comprise entre 5 et 30 m.

La forme de l'enceinte de flottage selon l'invention épouse mieux la forme du ruban de verre, ce qui réduit la surface libre d'étain non recouvert de verre entre la feuille de verre et la paroi latérale de l'enceinte. La réduction de la largeur de surface libre sur les bords permet de rapprocher les courants aval et amont d'étain ce qui améliore les transferts par conduction et par convection naturelle au sein de l'étain. Cela conduit à réduire l'écart de température entre courant amont et aval de l'étain, et donc l'amplitude de l'oscillation temporelle de la température à l'origine de l'instabilité.

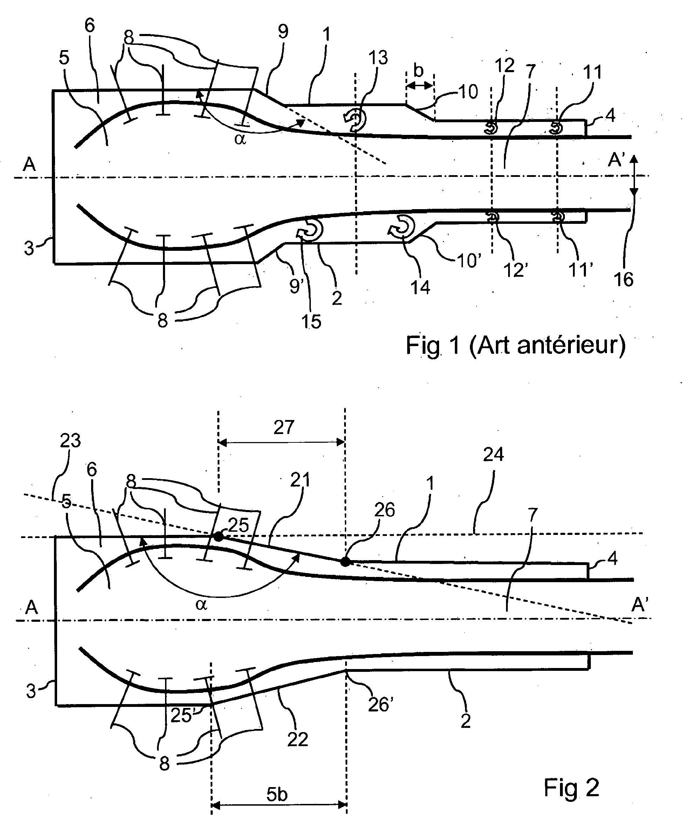

La figure 1 représente une enceinte de flottage selon l'art antérieur. Cette enceinte est symétrique par rapport à son axe longitudinale médian AA' et comprend deux parois latérales 1 et 2, une paroi amont 3, une paroi aval 4. Le verre fondu 5 est coulé en amont sur le bain de métal 6 et est étiré et entraîné vers l'aval par des rouleaux (top-rolls) 8 pour former un ruban 7 de verre. Le ruban de verre rigidifié en aval sort de l'enceinte au travers de la paroi aval 4. Ce ruban est le siège d'un mouvement de va-et-vient transversal comme représenté par la flèche à double-sens 16. C'est ce mouvement que l'invention permet d'éliminer. Les parois latérales comprennent deux épaulements 9, 10, 9' et 10' chacune. Tous ces épaulements sont identiques et procurent de façon brusque un rétrécissement de la largeur de l'enceinte (distance entre parois latérales) sur la longueur d'une bay représenté par « b » sur la figure 1 selon la direction longitudinale. Ces épaulements forment un angle alpha dans la paroi latérale d'environ 135° entre la paroi en amont de l'épaulement et l'épaulement lui-même. Des tourbillons se sont formés dans le bain de métal en aval et remontent vers l'amont. Les tourbillons 11 et 11' sont en phase car situés à la même distance de la paroi aval (un segment de droite en pointillé montre leur alignement). Il en est de même pour les tourbillons 12 et 12'. Par contre, après avoir passé les épaulements 10 et 10', on constate que les tourbillons 13, 14 et 15 ne sont plus en phase.

La figure 2 représente une enceinte de flottage selon l'invention. Cette enceinte est symétrique par rapport à son axe longitudinal médian AA' et comprend deux parois latérales 1 et 2, une paroi amont 3, une paroi aval 4. Le verre fondu 5 est coulé en amont sur le bain de métal 6 et est étiré et entraîné vers l'aval par des rouleaux (top-roll) 8 pour former un ruban 7 de verre. Le ruban de verre rigidifié en aval sort de l'enceinte au travers de la paroi aval 4. Les parois transversales comprennent chacune un épaulement 21 et 22. Ces épaulements procurent un rapprochement des parois latérales quand on va de l'amont vers l'aval. Ces épaulements sont beaucoup plus progressifs que dans le cas de la figure 1. Selon la direction longitudinale, chaque épaulement a environ une longueur de 5 bays (noté 5b sur la figure 2). Les épaulements commencent respectivement aux points 25 et 25' et finissent respectivement aux points 26 et 26'. Le plan vertical 23 passe par les points de début 25 et de fin 26 de l'un des épaulements (paroi latérale de gauche selon le sens de défilement du verre). Il forme un angle alpha avec le plan vertical 24 parallèle à la direction de défilement du verre et passant par le premier point 25, ledit angle étant celui à l'intérieur de l'enceinte. Cet angle est supérieur à 150°. On voit que chaque épaulement commence à une distance de la paroi amont supérieure à 25% de la distance entre parois amont et paroi aval. On voit également que chaque épaulement finit à une distance de la paroi amont inférieure à 75% de la distance totale entre la paroi amont et la paroi aval de l'enceinte.

## Revendications

1. Enceinte de flottage de verre (5) sur un bain de métal fondu (6) comprenant une paroi amont (3), une paroi aval (4) et deux parois latérales (1,2), des rouleaux d'entraînement (8) du verre selon une direction de défilement d'amont en aval, les parois latérales comprenant chacune un épaulement (21,22) en correspondance symétrique l'un par rapport à l'autre, procurant une diminution de la largeur de l'enceinte dans la direction de défilement du verre, ledit épaulement commençant en un premier point (25,25') et finissant en un deuxième point (26,26') de la paroi latérale lesdits points étant en contact avec la surface du bain de métal, **caractérisé en ce que** le plan vertical (23) passant par ces deux points forme avec le plan vertical (24) parallèle à la direction de défilement du verre et passant par le premier point, un angle (α) à l'intérieur de l'enceinte supérieur à 150°.

2. Enceinte selon la revendication précédente, **caractérisé en ce que** l'angle (α) est supérieur à 160°et de préférence supérieur à 165°.

3. Enceinte selon l'une des revendications précédentes, **caractérisé en ce que** l'angle (α) est inférieur à 175°.

4. Enceinte selon l'une des revendications précédentes, **caractérisé en ce que** la distance entre les deux parois latérales (1,2) est inférieur de 20 % voire inférieur de 30 % au niveau de la paroi aval (4) dé l'enceinte, comparé avec la distance maximale entre les deux parois latérales.

5. Enceinte selon l'une des revendications précédentes, **caractérisé en ce que** la longueur (27,5b) de l'épaulement selon la direction longitudinale est supérieur à 4 m et de préférence supérieur à 5 m.

6. Enceinte selon la revendication précédente, **caractérisé en ce que** la longueur (27,5b) de l'épaulement selon la direction longitudinale est supérieur à 10 m.

7. Enceinte selon l'une des revendications précédentes, **caractérisé en ce que** la longueur (27,5b) de l'épaulement selon la direction longitudinale est inférieure à 80 m.

8. Enceinte selon l'une des revendications précédentes, **caractérisé en ce que** l'épaulement commence à une distance de la paroi amont (3) supérieure à 25% de la distance totale entre la paroi amont et la paroi aval de l'enceinte, et **en ce que** l'épaulement finit à une distance de la paroi amont inférieure à 75% de la distance totale entre la paroi amont (3) et la paroi aval (4) de l'enceinte.

9. Enceinte selon l'une des revendications précédentes, **caractérisé en ce qu'**elle est symétrique par rapport à un axe longitudinal médian.

10. Procédé de fabrication de verre plat comprenant le flottage du verre dans une enceinte de l'une des revendications précédentes.

11. Procédé selon la revendication précédente, **caractérisé en ce que** le verre est étiré transversalement et axialement par l'action de rouleaux dentées (8) dans l'enceinte de flottage.

12. Procédé selon l'une des revendications précédentes de procédé, **caractérisé en ce que** le verre plat a une épaisseur inférieure à son épaisseur d'équilibre sur le métal fondu.

13. Procédé selon l'une des revendications précédentes de procédé, **caractérisé en ce que** le verre plat a une épaisseur inférieure à 6 mm.

14. Procédé selon l'une des revendications précédentes de procédé, **caractérisé en ce que** la distance entre les deux parois latérales (1,2) est inférieur de 20 % voire inférieur de 30 % au niveau de la paroi aval de l'enceinte, comparé avec la distance entre les deux parois latérales au niveau où le ruban (7) de verre présente sa largeur maximale.

15. Procédé selon l'une des revendications précédentes de procédé, **caractérisé en ce que** la largeur maximale du ruban de verre se trouve à une distance de la paroi amont comprise entre 5 et 30 m.

## Patentansprüche

1. Kammer für Floatglas (5) auf einem Flüssigmetallbad (6), umfassend eine oberstromige Wand (3), eine unterstromige Wand (4) und zwei Seitenwände (1,2), Rollen zum Mitnehmen (8) des Glases entlang einer Vorschubrichtung von oberstromig zu unterstromig, wobei die Seitenwände jeweils eine Schulter (21, 22) umfassen, die einander symmetrisch entsprechen, die eine Verringerung der Kammerbreite in Vorschubrichtung des Glases bewirken, wobei die Schulter an einem ersten Punkt (25,25') beginnt und an einem zweiten Punkt (26,26') der Seitenwand endet, wobei die Punkte in Kontakt mit der Oberfläche des Metallbades stehen, **dadurch gekennzeichnet, dass** die Vertikalebene (23), die sich durch diese zwei Punkte erstreckt, mit der Vertikalebene (24), die parallel zu der Vorschubrichtung des Glases ist und den ersten Punkt passiert, einen Winkel (α) im Inneren der Kammer bildet, der größer als 150° ist.

2. Kammer nach dem vorhergehenden Anspruch, **dadurch gekennzeichnet, dass** der Winkel (α) größer als 160°, vorzugsweise größer als 165° ist.

3. Kammer nach einem der vorhergehenden Ansprüche, **dadurch gekennzeichnet, dass** der Winkel (α) kleiner als 175° ist.

4. Kammer nach einem der vorhergehenden Ansprüche, **dadurch gekennzeichnet, dass** der Abstand zwischen den zwei Seitenwänden (1,2) auf Höhe der unterstromigen Wand (4) der Kammer verglichen mit dem maximalen Abstand zwischen den zwei Seitenwänden 20 % kleiner, oder sogar 30 % kleiner ist.

5. Kammer nach einem der vorhergehenden Ansprüche, **dadurch gekennzeichnet, dass** die Länge (27,5b) der Schulter entlang der Längsrichtung größer als 4 m und vorzugsweise größer als 5 m ist.

6. Kammer nach einem der vorhergehenden Ansprüche, **dadurch gekennzeichnet, dass** die Länge (27,5b) der Schulter entlang der Längsrichtung größer als 10 m ist.

7. Kammer nach einem der vorhergehenden Ansprüche, **dadurch gekennzeichnet, dass** die Länge (27,5b) der Schulter entlang der Längsrichtung kleiner als 80 m ist.

8. Kammer nach einem der vorhergehenden Ansprüche, **dadurch gekennzeichnet, dass** dieSchulter bei einem Abstand zur oberstromigen Wand (3) von über 25 % des Gesamtabstandes zwischen der oberstromigen Wand und der unterstromigen Wand der Kammer beginnt, und dadurch, dass die Schulter bei einem Abstand zur oberstromigen Wand von weniger als 75 % des Gesamtabstandes zwischen der oberstromigen Wand (3) und der unterstromigen Wand (4) der Kammer endet.

9. Kammer nach einem der vorhergehenden Ansprüche, **dadurch gekennzeichnet, dass** sie symmetrisch in Bezug zu einer Mittellängsachse ist.

10. Verfahren zur Herstellung von Flachglas, umfassend das Floating des Glases in einer Kammer nach einem der vorhergehenden Ansprüche.

11. Verfahren nach dem vorhergehenden Anspruch, **dadurch gekennzeichnet, dass** das Glas in der Floatkammer durch die Betätigung von Zahnrollen (8) transversal und axial gezogen wird.

12. Verfahren nach einem der vorhergehenden Verfahrensansprüche, **dadurch gekennzeichnet, dass** das Flachglas eine Dicke aufweist, die geringer ist als seine Gleichgewichtsdicke auf dem Flüssigmetall.

13. Verfahren nach einem der vorhergehenden Verfahrensansprüche, **dadurch gekennzeichnet, dass** das Flachglas eine Dicke von weniger als 6 mm aufweist.

14. Verfahren nach einem der vorhergehenden Verfahrensansprüche, **dadurch gekennzeichnet, dass** der Abstand zwischen den zwei Seitenwänden (1,2) auf Höhe der unterstromigen Wand der Kammer verglichen mit dem Abstand zwischen den zwei Seitenwänden auf der Höhe, wo das Glasband (7) seine maximale Breite aufweist, 20 % oder sogar 30 % kleiner ist.

15. Verfahren nach einem der vorhergehenden Verfahrensansprüche, **dadurch gekennzeichnet, dass** die maximale Breite des Glasbandes sich bei einem Abstand zur oberstromigen Wand im Bereich zwischen 5 und 30 m befindet.

## Claims

1. A chamber for floating glass (5) on a bath of molten metal (6) comprising an upstream wall (3), a downstream wall (4) and two lateral walls (1,2), rolls (8) for driving the glass in a direction of travel from upstream to downstream, the lateral walls each comprising a shoulder (21,22) in symmetrical correspondence to one another, resulting in a reduction in the width of the chamber in the direction of travel of the glass, said shoulder starting at a first point (25,25') and terminating at a second point (26,26') of the lateral wall, said points being in contact with the surface of the bath of metal, **characterized in that** the vertical plane (23) passing through said two points forms with the vertical plane (24), parallel with the direction of travel of the glass and passing through the first point, an angle (α) inside the chamber which is greater than 150°.

2. The chamber as claimed in the preceding claim, **characterized in that** the angle (α) is greater than 160° and preferably greater than 165°.

3. The chamber as claimed in one of the preceding claims, **characterized in that** the angle (α) is less than 175°.

4. The chamber as claimed in one of the preceding claims, **characterized in that** the distance between the two lateral walls (1,2) is 20% less, or even 30% less, in the region of the downstream wall (4) of the chamber, compared with the maximum distance between the two lateral walls.

5. The chamber as claimed in one of the preceding claims, **characterized in that** the length (27,5b) of the shoulder in the longitudinal direction is greater than 4 m and preferably greater than 5 m.

6. The chamber as claimed in the preceding claim, **characterized in that** the length (27,5b) of the shoulder in the longitudinal direction is greater than 10 m.

7. The chamber as claimed in one of the preceding claims, **characterized in that** the length (27,5b) of the shoulder in the longitudinal direction is less than 80 m.

8. The chamber as claimed in one of the preceding claims, **characterized in that** the shoulder starts at a distance from the upstream wall (3) more than 25% of the total distance between the upstream wall and the downstream wall of the chamber and **in that** the shoulder terminates at a distance from the upstream wall less than 75% of the total distance between the upstream wall (3) and the downstream wall (4) of the chamber.

9. The chamber as claimed in one of the preceding claims, **characterized in that** it is symmetrical relative to a longitudinal median axis.

10. A method for manufacturing flat glass comprising the floating of the glass in a chamber of one of the preceding claims.

11. The method as claimed in the preceding claim, **characterized in that** the glass is stretched transversely and axially by the action of toothed rollers (8) in the float chamber.

12. The method as claimed in one of the preceding method claims, **characterized in that** the flat glass has a thickness which is less than its equilibrium thickness on the molten metal.

13. The method as claimed in one of the preceding method claims, **characterized in that** the flat glass has a thickness of less than 6 mm.

14. The method as claimed in one of the preceding method claims, **characterized in that** the distance between the two lateral walls (1,2) is less than 20%, or even less than 30% in the region of the downstream wall of the chamber, compared with the distance between the two lateral walls in the region where the glass ribbon (7) has its maximum width.

15. The method as claimed in one of the preceding method claims, **characterized in that** the maximum width of the glass ribbon is located at a distance of between 5 and 30 m from the upstream wall.
